# EUROPÄISCHE PATENTANMELDUNG

(11) **EP 3 023 947 A1**
(43) Veröffentlichungstag der Anmeldung: **25.05.2016**
(21) Anmeldenummer: 15195964.0
(22) Anmeldetag: 24.11.2015
(51) Int. Cl.: G07F 13/00, G06Q 30/06

(54) **VORRICHTUNG ZUR AUSGABE VON GESCHMACKSSTOFFEN FÜR E-ZIGARETTEN**

(30) Priorität: 24.11.2014 DE 202014105654 U
(71) Anmelder: Hermann, Schirra, 66111 Saarbrücken (DE); Hummel, Rüdiger, 66424 Homburg (DE)
(72) Erfinder: Hermann, Schirra, 66111 Saarbrücken (DE); Hummel, Rüdiger, 66424 Homburg (DE)
(74) Vertreter: Wieske, Thilo

(57) **Zusammenfassung**

Die vorliegende Erfindung betrifft eine Vorrichtung zur Ausgabe von Geschmacksstoffen für E-Zigaretten, wobei die Vorrichtung ein Verkaufsautomat (1) im öffentlichen Verkehrsraum ist mit einer Einheit zur Abwicklung eines Bezahlvorganges sowie einer Eingabeeinheit (2) für die Vorgabe einer gewünschten Zusammensetzung des Geschmacksstoffs durch den Benutzer sowie einer Einheit (8) zur Ausgabe eines Geschmacksstoffes für E-Zigaretten. Nach der vorliegenden Erfindung weist der Verkaufsautomat (1) eine Mischeinrichtung (4, 5, 6, 7) auf zur Mischung eines Geschmacksstoffes aus Grundkomponenten. Die Eingabeeinheit (2) weist eine Datenempfangseinrichtung (12) auf zur Kommunikation mit einer nutzerseitigen Datenausgabeeinrichtung (3). Von der nutzerseitigen Datenausgabeeinrichtung (3) ist ein Datensatz mit einer Codierung ausgebbar, die einer Zusammensetzung eines Geschmacksstoffes aus den Grundkomponenten entspricht. Dieser Datensatz ist von der Datenempfangseinrichtung (12) der Eingabeeinheit (2) empfangbar, wobei der Verkaufsautomat (1) eine Auswerteeinheit (11) aufweist, in der aus einem empfangenen Datensatz die gewünschte Zusammensetzung eines Geschmacksstoffes aus den Grundkomponenten ermittelbar ist. Die Auswerteeinheit (11) steuert die Mischeinrichtung (4, 5, 6, 7) derart an, dass von der Mischeinrichtung abhängig von der ermittelten gewünschten Zusammensetzung des Geschmacksstoffs aus den Grundkomponenten der Geschmacksstoff gemischt und nachfolgend von der Einheit (8) zur Ausgabe ausgegeben wird.

## Beschreibung

Die vorliegende Erfindung betrifft eine Vorrichtung zur Ausgabe von Geschmacksstoffen für E-Zigaretten nach dem Oberbegriff des Anspruchs 1.

Es ist bereits eine derartige Vorrichtung zur Ausgabe von Geschmacksstoffen für E-Zigaretten bekannt. Diese Vorrichtung ist ein Verkaufsautomat im öffentlichen Verkehrsraum mit einer Einheit zur Abwicklung eines Bezahlvorganges, einer Eingabeeinheit für die Vorgabe einer gewünschten Zusammensetzung des Geschmacksstoffs durch den Benutzer und einer Einheit zur Ausgabe eines Geschmacksstoffes für E-Zigaretten.

Ein derartiger Verkaufsautomat ist zum Zeitpunkt der Einreichung der Anmeldung auf der Internetseite www.dolcefumo.de beschrieben derart, dass dieser Verkaufsautomat im Stadtgebiet Stuttgart positioniert ist. An dem Verkaufsautomaten kann gegen Einwurf von Münzgeld eine Auswahl unter verschiedenen fertig vorkonfigurierten Geschmacksstoffen getroffen werden. Außer den Geschmacksstoffen können an dem Automaten auch Batterien sowie ein Verdampfer bezogen werden.

Es ist auch bekannt, individuell konfigurierte Geschmacksstoffe für E-Zigaretten über das Internet zu bestellen. Dort können - zumindest in gewissen Grenzen - die Geschmacksstoffe in ihrer Zusammensetzung aus verschiedenen Grundkomponenten vom Kunden selbst zusammengestellt werden. Dies gilt sowohl im Hinblick darauf, ob eine bestimmte Grundkomponenten überhaupt im Geschmacksstoff enthalten sowie auch über den (prozentualen) Anteil, in dem die Grundkomponenten im Geschmacksstoff enthalten ist. Der Geschmacksstoff wird nach der Bestellung entsprechend gemischt und dem Kunden nach Hause (bzw. an die angegebene Wunschadresse) gesandt.

Der vorliegenden Erfindung liegt die Aufgabe zu Grunde, eine verbesserte Ausgabemöglichkeit für Geschmacksstoffe für E-Zigaretten zu schaffen.

Diese Aufgabe wird mit einem eingangs genannten Verkaufsautomaten gelöst derart, dass der Verkaufsautomat eine Mischeinrichtung aufweist zur Mischung eines Geschmacksstoffes aus Grundkomponenten. Weiterhin weist die Eingabeeinheit eine Datenempfangseinrichtung auf zur Kommunikation mit einer nutzerseitigen Datenausgabeeinrichtung. Von der nutzerseitigen Datenausgabeeinrichtung ist ein Datensatz mit einer Codierung ausgebbar, die einer Zusammensetzung eines Geschmacksstoffes aus den Grundkomponenten entspricht. Hierzu weist die Datenausgabeeinrichtung Ausgabemittel auf zur Ausgabe des Datensatzes. Dieser Datensatz ist von der Datenempfangseinrichtung der Eingabeeinheit empfangbar. Dazu weist die Eingabeeinheit Empfangsmittel aus zum Empfang des Datensatzes. Der Verkaufsautomat weist eine Auswerteeinheit auf, in der aus einem empfangenen Datensatz die gewünschte Zusammensetzung eines Geschmacksstoffes aus den Grundkomponenten ermittelbar ist. Hierzu wird der Auswerteeinheit ein den empfangenen Datensatz repräsentierendes Signal zugeführt. Die Auswerteeinheit steuert die Mischeinrichtung derart an, dass von der Mischeinrichtung abhängig von der ermittelten gewünschten Zusammensetzung des Geschmacksstoffs aus den Grundkomponenten der Geschmacksstoff gemischt wird. Nachfolgend wird dieser Geschmacksstoff von der Einheit zur Ausgabe ausgegeben.

Diese Ausgestaltung des Verkaufsautomaten führt dazu, dass der Benutzer vom Verkaufsautomaten unmittelbar Geschmacksstoff für seine E-Zigarette bekommen kann. Dies erweist sich als vorteilhaft gegenüber der Bestellung über das Internet, bei der der Verbraucher die Ware erst mit einem Zeitverzug (Versand) erhält. Die unmittelbare Verfügbarkeit des Geschmacksstoffs wird der Kunde als besonders vorteilhaft empfinden, wenn er vergessen hat, rechtzeitig Ersatz zu beschaffen, wenn seine Vorräte zur Neige gehen.

Trotz dieser guten Verfügbarkeit für den Kunden kann eine umfassende Auswahl an Geschmacksstoffen bereitgestellt werden, die aus verschiedensten Zusammensetzungen bestehen kann, wobei dennoch der logistische Aufwand für den Anbieter der Geschmacksstoffe begrenzt bleibt. Insbesondere ist es nicht notwendig, eine große Vielzahl von verschiedenen fertig gemischten Geschmacksstoffen mit verschiedenen Zusammensetzungen vorzuhalten und den Verkaufsautomaten entsprechend zu bestücken.

Dies wird vorteilhaft dadurch erreicht, dass der Geschmacksstoff erst dann gemischt wird, wenn er benötigt wird.

Es besteht die Möglichkeit, dass der Kunde an der Eingabeeinheit des Verkaufsautomaten den gewünschten Geschmacksstoff in seiner Zusammensetzung angibt. Dies führt dazu, dass der Kunde bei einer entsprechenden Vielzahl verschiedener Grundkomponenten einige Daten eingeben muss. Hinzu kommt, dass der Kunde eventuell gerne eine bevorzugte Kombination von Grundkomponenten in "seinem" Geschmacksstoff hat, aber die genaue Zusammensetzung der Grundkomponenten nicht kennt.

In diesem Zusammenhang erweist es sich als vorteilhaft, dass die Eingabeeinheit des Verkaufsautomaten eine Datenempfangseinrichtung aufweist zur Kommunikation mit einer nutzerseitigen Datenausgabeeinrichtung.

Wie nachfolgend noch erörtert kann die Kombination der Grundkomponenten des Geschmacksstoffs durch eine Codierung repräsentiert werden. Diese Codierung kann nach der Art eines flächigen Musters, wie beispielsweise in der Art eines QR-Codes erfolgen, oder auch als Strichcode, die beispielsweise als EAN-Codierung verwendet werden.

Es ist beispielsweise möglich, dem Benutzer bei einer vorherigen Bestellung eine entsprechende Codierung des Geschmacksstoffes auf das Ausgabegefäß aufzubringen. Will der Kunde denselben Geschmacksstoff wiederhaben, wird als Datenempfangseinrichtung der Eingabeeinheit des Verkaufsautomaten vorteilhaft eine Leseeinheit verwendet, mit der die Codierung des Ausgabegefäßes erkannt werden kann, wenn der Kunde das (leere) Ausgabegefäß der vorherigen Bestellung vor die Datenempfangseinrichtung hält.

Ebenso kann dem Kunden bei einer vorherigen Bestellung eine entsprechende Codierung auf elektronischem Wege zugesandt werden. Bei einem Nachkauf am Verkaufsautomaten kann die Codierung dann beispielsweise auf dem Bildschirm eines Smartphones oder eines tablet-Computers ausgegeben werden, so dass die Datenempfangseinrichtung die Anzeige des Smartphone bzw. des tablet-Computers lesen kann.

Soweit die Datenempfangseinrichtung eine Kamera ist, hat der Nutzer ggf. verschiedene Möglichkeiten, eine Folgebestellung seines gewünschten Geschmacksstoffes durchzuführen.

Es ist auch möglich, dass die Datenempfangseinrichtung beispielsweise eine Empfangseinrichtung aufweist, die über eine geeignete Schnittstelle zur vorzugsweise drahtlosen Kommunikation mit einem mobilen Gerät des Kunden geeignet ist. Dies kann beispielsweise eine Kommunikation über bluetooth sein oder WLAN (WiFi) oder auch eine Kommunikation über Datendienste (beispielsweise SMS) oder das Internet.

In diesem Fall muss die nutzerseitige Datenausgabeeinrichtung ebenfalls entsprechend ausgestaltet sein, so dass die Kommunikation ermöglicht wird.

Von der nutzerseitigen Datenausgabeeinrichtung wird damit ein Datensatz mit einer Codierung ausgegeben, die einer Zusammensetzung eines Geschmacksstoffes aus den Grundkomponenten entspricht.

Dieser Datensatz ist von der Datenempfangseinrichtung der Eingabeeinheit empfangbar.

Der Verkaufsautomat weist weiterhin eine Auswerteeinheit auf, in der aus einem empfangenen Datensatz die gewünschte Zusammensetzung eines Geschmacksstoffes aus den Grundkomponenten ermittelbar ist.

Die Auswerteeinheit steuert die Mischeinrichtung derart an, dass von der Mischeinrichtung abhängig von der ermittelten gewünschten Zusammensetzung des Geschmacksstoffs aus den Grundkomponenten der Geschmacksstoff gemischt wird.

Nachfolgend wird dieser Geschmacksstoff von der Einheit zur Ausgabe ausgegeben.

Gegebenenfalls kann zuvor noch eine Codierung entsprechend der Zusammensetzung des Geschmacksstoffs aus den Grundkomponenten auf das Ausgabegefäß aufgebracht werden.

Bei der Ausgestaltung nach Anspruch 2 weist die Eingabeeinheit eine Bedieneinheit zur manuellen Eingabe der gewünschten Zusammensetzung des Geschmacksstoffs durch den Benutzer auf.

Vorteilhaft kann der Benutzer auch dann einen Geschmacksstoff an dem Verkaufsautomaten beziehen, wenn er seine nutzerseitige Datenausgabeeinheit (beispielsweise sein Smartphone) gerade nicht dabei hat.

Bei der Ausgestaltung nach Anspruch 3 ist über die Bedieneinheit eine von der Auswerteeinheit ermittelte gewünschte Zusammensetzung des Geschmacksstoffes korrigierbar.

Wenn der Nutzer in seinem bisherigen Geschmacksstoff beispielsweise nur eine bzw. einige wenige Grundkomponenten ändern will, muss der Nutzer dann die Zusammensetzung nicht vollständig neu eingeben sondern kann die bisherige Zusammensetzung automatisch einlesen lassen und nachfolgend die gewünschten Änderungen vornehmen.

Bei der Ausgestaltung nach Anspruch 4 sind in dem Verkaufsautomat Ausgabebehältnisse für die einzelnen Grundkomponenten vorhanden mit jeweils wenigstens einer verschließbaren Ausgabeöffnung, wobei Positioniermittel für ein Ausgabegefäß des Geschmacksstoffs vorhanden sind zur Positionierung des Ausgabegefäßes unter einer verschließbaren Ausgabeöffnung, wobei weitere Positioniermittel vorhanden sind zur Positionierung des Ausgabegefäßes zu einer Verschlusseinrichtung, nachdem alle gewünschten Grundkomponenten in das Ausgabegefäß gefüllt wurden.

Vorteilhaft wird bei dieser Ausgestaltung der Vorrichtung erreicht, dass die Grundkomponenten auch bei der Mischung eines Geschmacksstoffes für einen Nutzer voneinander getrennt bleiben. Würden die Grundkomponenten beispielsweise über eine gemeinsame Zuleitung zu einer Ausgabeöffnung geführt, müsste diese nach jedem Mischvorgange gereinigt werden, damit der nächste Kunde keine unerwünschten Bestandteile in seinem Geschmacksstoff hat als "Rest" des Geschmacksstoffs des vorherigen Kunden.

Außerdem ermöglicht diese Vorgehensweise eine schnellere Taktung von mehreren Bestellungen von Kunden nacheinander. Wenn eine gemeinsame Zuleitung von Grundkomponenten zu einer Ausgabeöffnung verwendet wird, kann eine Mischung für einen nachfolgenden Kunden erst begonnen werden, wenn die Mischung für den vorhergehenden Kunden abgeschlossen ist (und die Ausgabeleitung gereinigt ist). Demgegenüber kann bei der Ausgestaltung nach Anspruch eine Grundkomponenten bereits in das Ausgabegefäß für einen nachfolgenden Kunden eingefüllt werden, wenn die entsprechende Grundkomponente in das Ausgabegefäß des vorhergehenden Kunden eingefüllt wurde bzw. dessen Ausgabegefäß an der Ausgabeöffnung dieser Grundkomponenten vorbei bewegt wurde, weil diese Grundkomponenten nicht zugemischt werden soll. Dies gilt insbesondere auch dann, wenn die Mischung für den vorhergehenden Kunden noch nicht abgeschlossen ist.

Die Ausgabeöffnungen der Ausgabebehältnisse der einzelnen Grundkomponenten sind verschließbar, damit über die Öffnungszeiten der Ausgabeöffnungen die Menge eingestellt werden kann, in der die jeweilige Grundkomponente in das Ausgabegefäß eingefüllt wird.

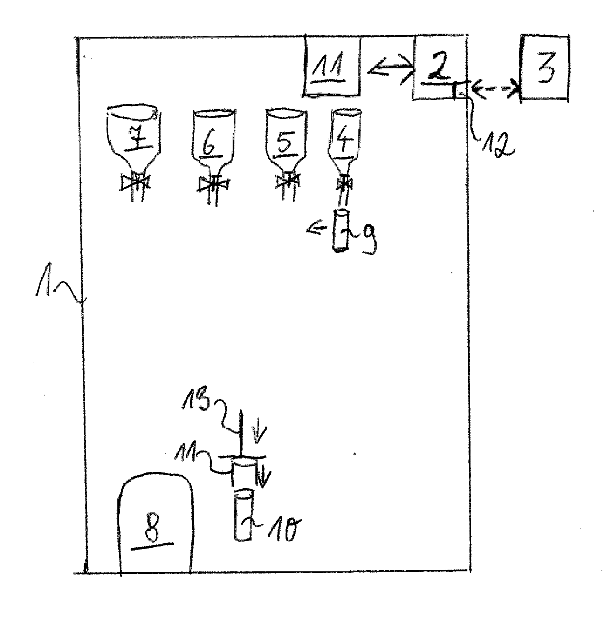

Ein Ausführungsbeispiel der Erfindung ist in der Zeichnung dargestellt. Die einz8ge Figur zeigt dabei einen Verkaufsautomaten 1. Dieser weist eine Eingabeeinheit 2 auf, die eine Datenempfangseinrichtung 12 für einen Datenaustausch mit einer nutzerseitigen Datenausgabeeinrichtung 3 ermöglicht.

Über die Eingabeeinheit 2 ist auch eine manuelle Eingabe der gewünschten Zusammensetzung des Geschmacksstoffs möglich. Von der Eingabeeinheit 2 werden die Daten weitergeleitet zu einer Auswerteeinheit 11, in der ggf. aus der Codierung die gewünschte Zusammensetzung des Geschmacksstoffs ermittelt wird.

Ggf. kann die von der Auswerteeinheit 11 ermittelte Zusammensetzung nochmals angezeigt werden, so dass der Benutzer nochmals über die Eingabeeinheit 2 eine Korrektur vornehmen kann.

Wenn die gewünschte Zusammensetzung daran anschließend definiert ist, wird eine Mischeinrichtung angesteuert, in der die gewünschte Zusammensetzung erzeugt wird. Die Mischeinrichtung kann so aufgebaut sein, dass ein Ausgabegefäß 9 unter die einzelnen Ausgabebehältnisse 4, 5, 6, 7 positioniert wird. Wenn die entsprechende Position erreicht wurde und die Komponenten in dem entsprechenden Ausgabebehältnis zugemischt werden soll, wird das Ausgabegefäß angehalten und es erfolgt eine Rückmeldung an eine (hier nicht dargestellte) zentrale Steuereinheit. Die zentrale Steuereinheit veranlasst eine Öffnung der Ausgabeöffnung des jeweiligen Ausgabebehältnisses für eine entsprechende Zeitdauer. Nach dem Schließen der Ausgabeöffnung wird das Ausgabegefäß weiterbewegt.

In dem dargestellten Ausführungsbeispiel sind lediglich vier Ausgabebehältnisse dargestellt. Es ist ersichtlich, dass auch mehr Ausgabebehältnisse vorhanden sein können, abhängig von der Anzahl der vorgesehen Grundkomponenten. Die Ausgabebehältnisse können auch unterschiedlich groß sein, um zu berücksichtigen, dass bestimmte Grundkomponenten öfter beigemischt werden als andere. Gegebenenfalls können auch mehrere Ausgabebehältnisse mit denselben Grundkomponenten befüllt sein, wenn diese entsprechend häufig verwendet werden. In logistischer Hinsicht ist es dann vorteilhaft, zuerst eines dieser Ausgabebehältnisse zu leeren, damit dieses dann ausgetauscht werden kann.

Dabei ist es auch sinnvoll, eine Meldung an den Betreiber des Verkaufsautomaten auszugeben, wenn eine oder mehrere der Grundkomponenten zur Neige gehen.

In der Figur ist noch zu sehen, dass sich ein Ausgabegefäß 10 bei einer Verschlusseinrichtung 13 befindet. Diese Verschlusseinrichtung 13 besteht aus einem Stempel, mit dem ein Verschluss 11 über das Ausgabegefäß 10 gestülpt wird.

Von dort wird das Ausgabegefäß nach dem Verschließen weitergeleitet zur Einheit 8 zur Ausgabe des Geschmacksstoffes.

## Patentansprüche

1. Vorrichtung zur Ausgabe von Geschmacksstoffen für E-Zigaretten, wobei die Vorrichtung ein Verkaufsautomat (1) im öffentlichen Verkehrsraum ist mit einer Einheit zur Abwicklung eines Bezahlvorganges, einer Eingabeeinheit (2) für die Vorgabe einer gewünschten Zusammensetzung des Geschmacksstoffs durch den Benutzer und einer Einheit (8) zur Ausgabe eines Geschmacksstoffes für E-Zigaretten, **dadurch gekennzeichnet, dass** der Verkaufsautomat (1) eine Mischeinrichtung (4, 5, 6, 7) aufweist zur Mischung eines Geschmacksstoffes aus Grundkomponenten, wobei die Eingabeeinheit (2) eine Datenempfangseinrichtung (12) aufweist zur Kommunikation mit einer nutzerseitigen Datenausgabeeinrichtung (3), wobei von der nutzerseitigen Datenausgabeeinrichtung (3) ein Datensatz mit einer Codierung ausgebbar ist, die einer Zusammensetzung eines Geschmacksstoffes aus den Grundkomponenten entspricht, wobei dieser Datensatz von der Datenempfangseinrichtung (12) der Eingabeeinheit (2) empfangbar ist, wobei der Verkaufsautomat (1) eine Auswerteeinheit (11) aufweist, in der aus einem empfangenen Datensatz die gewünschte Zusammensetzung eines Geschmacksstoffes aus den Grundkomponenten ermittelbar ist, wobei die Auswerteeinheit (11) die Mischeinrichtung (4, 5, 6, 7) derart ansteuert, dass von der Mischeinrichtung abhängig von der ermittelten gewünschten Zusammensetzung des Geschmacksstoffs aus den Grundkomponenten der Geschmacksstoff gemischt und nachfolgend von der Einheit (8) zur Ausgabe ausgegeben wird.

2. Vorrichtung nach Anspruch 1,
**dadurch gekennzeichnet, dass** die Eingabeeinheit (2) eine Bedieneinheit zur manuellen Eingabe der gewünschten Zusammensetzung des Geschmacksstoffs durch den Benutzer aufweist.

3. Vorrichtung nach Anspruch 2,
**dadurch gekennzeichnet, dass** über die Bedieneinheit (2) eine von der Auswerteeinheit (11) ermittelte gewünschte Zusammensetzung des Geschmacksstoffes korrigierbar ist.

4. Vorrichtung nach einem der Ansprüche 1 bis 3,
**dadurch gekennzeichnet, dass** in dem Verkaufsautomat (1) Ausgabebehältnisse (4, 5, 6, 7) für die einzelnen Grundkomponenten vorhanden sind mit jeweils wenigstens einer verschließbaren Ausgabeöffnung, wobei Positioniermittel für ein Ausgabegefäß (9) des Geschmacksstoffs vorhanden sind zur Positionierung des Ausgabegefäßes (9) unter einer verschließbaren Ausgabeöffnung, wobei weitere Positioniermittel vorhanden sind zur Positionierung des Ausgabegefäßes (9, 10) zu einer Verschlusseinrichtung (13), nachdem alle gewünschten Grundkomponenten in das Ausgabegefäß (9, 10) gefüllt wurden.
